# EUROPEAN PATENT APPLICATION

(11) **EP 4 187 681 A1**
(43) Date of publication of application: **31.05.2023**
(21) Application number: 22210249.3
(22) Date of filing: 29.11.2022
(51) Int. Cl.: H01M 10/613, B60L 53/30, H01M 10/625, H01M 10/6569, H01M 50/204, H01M 50/249, H01M 50/317, H02J 7/00

(54) **RAPID COOLING AND TEMPERATURE MAINTENANCE SYSTEM FOR POWER BATTERY DURING FAST CHARGING**

(30) Priority: 30.11.2021 CN 202111451991
(71) Applicant: Chongqing Changan New Energy Vehicles Technology Co., Ltd, Chongqing 401133 (CN)
(72) Inventor: JIANG, Dongshan, Chongqing, 401133 (CN); YUAN, Changrong, Chongqing, 401133 (CN); MOU, Lisha, Chongqing, 401133 (CN); DENG, Chenghao, Chongqing, 401133 (CN); ZHOU, Anjian, Chongqing, 401133 (CN)
(74) Representative: 2K Patentanwälte Blasberg Kewitz & Reichel

(57) **Abstract**

The disclosure provides a rapid cooling and temperature maintenance system for the power battery during fast charging The rapid cooling and temperature maintenance system during the fast charging of the power battery includes: a liquid nitrogen storage tank, a liquid nitrogen vaporizer, a first liquid nitrogen pipeline, a second liquid nitrogen pipeline, a third liquid nitrogen pipeline, a first liquid nitrogen pipeline port integrated on a charger head, and a second liquid nitrogen pipeline port integrated on a vehicle charging port. The liquid nitrogen storage tank is stored with liquid nitrogen, and the liquid nitrogen storage tank is connected with the liquid nitrogen vaporizer through the first liquid nitrogen pipeline. A valve is arranged at a connecting position between the liquid nitrogen storage tank and the first liquid nitrogen pipeline. The liquid nitrogen vaporizer is connected with the first liquid nitrogen pipeline port through the second liquid nitrogen pipeline. A battery pack is connected with the second liquid nitrogen pipeline port through the third liquid nitrogen pipeline. When the charger head is connected and charged with the vehicle charging port, the first liquid nitrogen pipeline port is communicated with the second liquid nitrogen pipeline port. When the power battery is charged at a high rate current, the system can fast cool the battery pack, so that the battery may work in a best working temperature range.

## Description

### TECHNICAL FIELD

The disclosure belongs to the technical field of a power battery cooling, particularly to a rapid cooling and temperature maintenance system for a power battery during fast charging.

### BACKGROUND

Conventionally, the power of new energy vehicles is generally within 100kwh, which may meet the needs of normal commuting in the city or travel between adjacent cities. For family vehicles, demands for charging frequency is not high, but commercial vehicles need to frequently enter and exit the charging station for charging, which has a greater impact on operational efficiency. In addition, the marked charging power of the conventional fast charging piles is generally less than 200kw, the maximum charging power is less than 100kw when fast charging pile is actually used, and a duration time charging at high rate current is short, which results in the actual charging time being much longer than the theoretical charging time. The main reason is that when the battery is charged at a high rate current, the battery itself generates a large amount of heat, and the heat taken away by its own cooling system is limited, so the power has to be limited during charging to prevent the battery from being damaged by excessive temperature.

However, with the improvement of user needs and the development of battery technology, the development trend of power batteries is always moving towards large capacity. In order to meet the requirements of the battery charging time while the battery capacity increases, charging at a high rate current is imperative.

**Therefore,** it is necessary to develop a rapid cooling and temperature maintenance system for a power battery during fast charging.

### SUMMARY

**The** disclosure provides a rapid cooling and temperature maintenance system for a power battery during fast charging. When the power battery is charged at a high rate current, the system can fast cool the battery pack, so that the battery may work in a best working temperature range, which ensures a charging efficiency, shortens charging time, and improves user's charging experience.

The disclosure provides a rapid cooling and temperature maintenance system for the power battery during fast charging. The rapid cooling and temperature maintenance system for the power battery during fast charging includes a liquid nitrogen storage tank, a liquid nitrogen vaporizer, a first liquid nitrogen pipeline, a second liquid nitrogen pipeline, a third liquid nitrogen pipeline, a first liquid nitrogen pipeline port integrated on a charger head, and a second liquid nitrogen pipeline port integrated on a vehicle charging port. The liquid nitrogen storage tank is stored with liquid nitrogen, and the liquid nitrogen storage tank is connected with the liquid nitrogen vaporizer through the first liquid nitrogen pipeline. A valve is arranged at a connecting position between the liquid nitrogen storage tank and the first liquid nitrogen pipeline. The liquid nitrogen vaporizer is connected with the first liquid nitrogen pipeline port through the second liquid nitrogen pipeline. A battery pack is connected with the second liquid nitrogen pipeline port through the third liquid nitrogen pipeline. When the charger head is connected and charged with the vehicle charging port, the first liquid nitrogen pipeline port is communicated with the second liquid nitrogen pipeline port. The liquid nitrogen vaporizer is configured to convert flowing liquid nitrogen into nitrogen gas, when a vehicle is charged with a high rate current at a charging pile, the valve is turned on, and heat is absorbed during a process of converting the liquid nitrogen to nitrogen gas to reduce the temperature of the battery pack.

In an embodiment of the disclosure, the valve is an electronic valve.

In an embodiment of the disclosure, the rapid cooling and temperature maintenance system for the power battery during fast charging further includes a first control unit, the first control unit is respectively connected with the charging pile, the liquid nitrogen vaporizer and the electronic valve, and the first control unit controls the electronic valve and liquid nitrogen vaporizer to be on or off according to a charging mode of the charging pile.

In an embodiment of the disclosure, an evaporation port is arranged on the battery pack.

In an embodiment of the disclosure, the battery pack is provided with an explosion-proof valve, the rapid cooling and temperature maintenance system for the power battery during fast charging further includes a pressure sensor and second control unit, the second control unit is respectively connected with the explosion-proof valve and the pressure sensor. The pressure sensor is configured to detect a pressure in the battery pack, the second control unit is configured to receive a pressure value detected by the pressure sensor, and control the explosion-proof valve to open and remove the nitrogen gas from the battery pack when it is determined that the pressure value is greater than a pressure preset threshold.

The system of disclosure has the following advantages: when the power battery is charged at a high rate current, the system can fast cool the battery pack, so that the battery may work in a best working temperature range, which ensures a charging efficiency, shortens charging time, and improves user's charging experience.

### BRIEF DESCRIPTION OF THE DRAWINGS

FIG. 1 is a schematic structural view of an embodiment of the disclosure.
FIG. 2 is a principle block view of an embodiment of the disclosure.
FIG. 3 is another principle block view of an embodiment of the disclosure.

### PART NUMBER DESCRIPTION

1-liquid nitrogen storage tank, 2-first liquid nitrogen pipeline, 3-electronic valve, 4-liquid nitrogen vaporizer, 5-transformer box, 6-charging pile, 7-second liquid nitrogen pipeline, 8-first liquid nitrogen pipeline port, 9-wire, 10-first electrical connector, 11-second liquid nitrogen pipeline port, 12-second electrical connector, 13-battery pack, 14-third liquid nitrogen pipeline, 15-first control unit, 16-pressure sensor, 17-second control unit, 18-explosion-proof valve.

### DETAILED DESCRIPTION

The disclosure will be further described below in conjunction with the accompanying drawings.

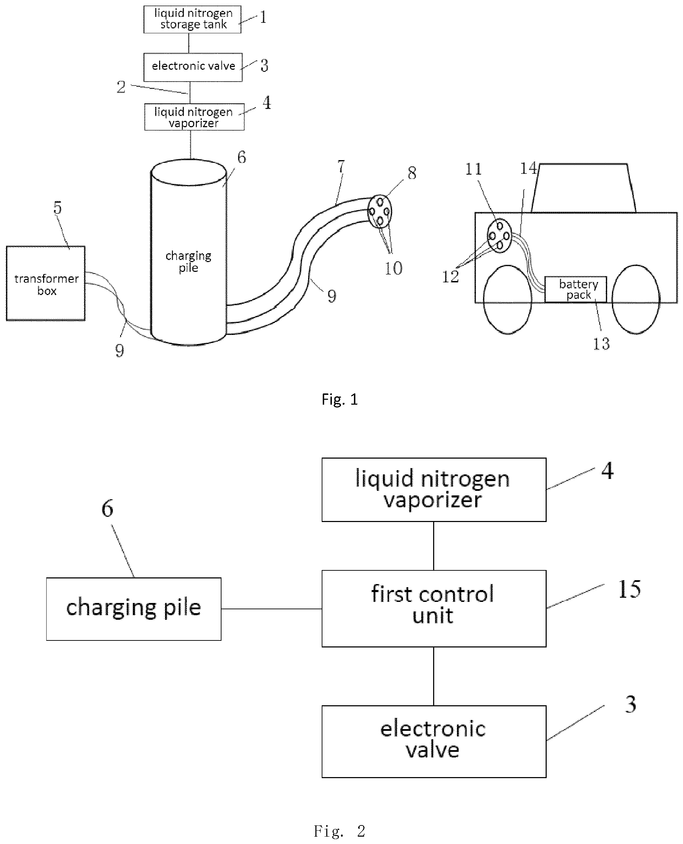

Please refer to FIG. 1. In an embodiment of the disclosure, a rapid cooling and temperature maintenance system for a power battery during fast charging includes a liquid nitrogen storage tank 1, a liquid nitrogen vaporizer 4, a first liquid nitrogen pipeline 2, a second liquid nitrogen pipeline 7, a third liquid nitrogen pipeline 14, a first liquid nitrogen pipeline port 8 integrated on a charger head, and a second liquid nitrogen pipeline port 11 integrated on a vehicle charging port. The liquid nitrogen storage tank 1 is stored with liquid nitrogen, and the liquid nitrogen storage tank 1 is connected with the liquid nitrogen vaporizer 4 through the first liquid nitrogen pipeline 2. A valve is arranged at a connecting position between the liquid nitrogen storage tank 1 and the first liquid nitrogen pipeline 2. The liquid nitrogen vaporizer 4 is connected with the first liquid nitrogen pipeline port 8 through the second liquid nitrogen pipeline 7. A battery pack 13 is connected with the second liquid nitrogen pipeline port 11 through the third liquid nitrogen pipeline 14. When the charger head is connected and charged with a second electrical connector 12 of the vehicle charging port through a first electrical connector 10, the first liquid nitrogen pipeline port 8 is communicated with the second liquid nitrogen pipeline port 11. The liquid nitrogen vaporizer 4 is configured to convert flowing liquid nitrogen into nitrogen gas. A charging pile 6 is connected with a transformer box 5 through a wire 9. When a vehicle is charged with a high rate current of a charging pile 6, the valve is turned on, and heat is absorbed by a process of converting the liquid nitrogen into nitrogen gas to reduce a temperature of the battery pack 13.

Please refer to FIG 2. In an embodiment of the disclosure, in order to realize automation, the valve is an electronic valve 3. An end of the charging pile 6 is further provided with a first control unit 15. The first control unit 15 is respectively connected with the charging pile 6, the liquid nitrogen vaporizer 4 and the electronic valve 3. The first control unit 15 controls the electronic valve 3 and liquid nitrogen vaporizer 4 to be on or off according to a charging mode of the charging pile 6.

In an embodiment of the disclosure, a super fast charging mode with liquid nitrogen is added. The vehicle still retains a normal fast charging mode or a home charging mode, and the user needs to choose whether to turn on the super fast charging mode. If the user chooses to turn on the super fast charging mode, the first control unit 15 controls the electronic valve 3 to open, and at the same time controls the liquid nitrogen vaporizer 4 to convert the inflowing liquid nitrogen into nitrogen gas.

In an embodiment of the disclosure, when the vehicle is charged with a high rate current at the charging pile 6, the battery pack 13 rapidly dissipates a lot of heat. At this time, the system of the disclosure works. As liquid nitrogen absorbs a large amount of heat in a short time when the liquid nitrogen is vaporized, the heat generated by a charging of the battery pack 13 is quickly taken away.

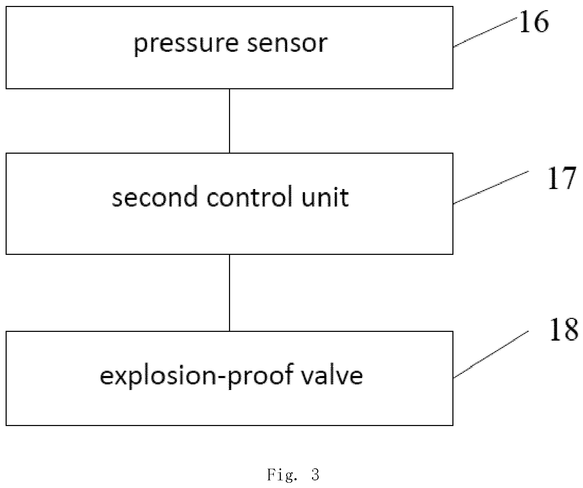

Please refer to FIG. 3. In an embodiment of the disclosure, an explosion-proof valve 18 is arranged in the battery pack 13. When a pressure in the battery pack 13 is greater than a preset pressure threshold, the explosion-proof valve 18 is opened to discharge the nitrogen gas in the battery pack 13. In order to realize automatic discharge, a pressure sensor 16 and a second control unit 17 need to be arranged at a vehicle. The second control unit 17 is respectively connected with the explosion-proof valve 18 and the pressure sensor 16. The pressure sensor 16 is used to detect a pressure in the battery pack 13. The second control unit 17 is used to receive a pressure value detected by the pressure sensor 16, and control the explosion-proof valve 18 to open when it is determined that the pressure value is greater than the preset pressure threshold.

After charging, the main gas component left in the battery pack 13 is the nitrogen. Nitrogen is one of the inert gases, which may also effectively reduce an internal humidity of the battery pack 13, prevent adverse reactions such as parts oxidation, and prolong a duration life of internal parts in the battery pack 13.

In an embodiment of the disclosure, the battery pack 13 is provided with an evaporation port, the evaporation port should not be directly facing a battery module.

In an embodiment of the disclosure, during the high rate current charging (which is the super fast charging mode), since a cooling method is provided by the rapid cooling and temperature maintenance system for the power battery during fast charging , the charging pile 6 does not need to divide current to a vehicle cooling system. In addition, the temperature of the battery pack 13 is in an optimal working temperature range. Theoretically, charging current may reach a limit current value allowed by a material of a battery cell, which may achieve that a cruising range may be increased by hundreds of kilometers or even thousands of kilometers with charging for a few minutes.

The rapid cooling and temperature maintenance system for the power battery during fast charging is mainly used in the high rate current fast charging of the battery. The rapid cooling and temperature maintenance system for the power battery during fast charging does not mean that it may replace the conventional vehicle and battery thermal management system. A temperature control of the battery during ordinary fast charging, home charging and normal discharging is still realized by the vehicle thermal management/battery thermal management system.

The rapid cooling and temperature maintenance system for the power battery during fast charging mainly uses a heat absorption principle by liquid nitrogen vaporization, which is pure physical changes, and do not cause chemical substances and adverse effects on the battery cell. In a process of charging of the power battery at a high rate current, a heating power of the battery is calculated according to P=I²R. As the current increases, the heat of the battery increases geometrically. When the current reaches a certain value, cooling system of the vehicle may not meet battery cooling requirements. At this time, the rapid cooling and temperature maintenance system for the power battery during fast charging may be turned on to achieve the rapid cooling of the battery. At the same time, through adjusting liquid nitrogen flow, the battery temperature is maintained within the optimal working temperature range.

## Claims

1. A rapid cooling and temperature maintenance system for a power battery during
fast charging, comprising:
a liquid nitrogen storage tank (1),
a liquid nitrogen vaporizer (4),
a first liquid nitrogen pipeline (2),
a second liquid nitrogen pipeline (7),
a third liquid nitrogen pipeline (14),
a first liquid nitrogen pipeline port (8) integrated on a charger head, and
a second liquid nitrogen pipeline port (11) integrated on a vehicle charging port, wherein
the liquid nitrogen storage tank (1) is stored with liquid nitrogen, the liquid nitrogen storage tank (1) is connected with the liquid nitrogen vaporizer (4) through the first liquid nitrogen pipeline (2), and a valve is arranged at a connecting position between the liquid nitrogen storage tank (1) and the first liquid nitrogen pipeline (2),
the liquid nitrogen vaporizer (4) is connected with the first liquid nitrogen pipeline port (8) through the second liquid nitrogen pipeline (7),
a battery pack (13) is connected with the second liquid nitrogen pipeline port (11) through the third liquid nitrogen pipeline (14),
when the charger head is connected and charged with the vehicle charging port, the first liquid nitrogen pipeline port (8) is communicated with the second liquid nitrogen pipeline port (11),
the liquid nitrogen vaporizer (4) is configured to convert flowing liquid nitrogen into nitrogen gas, when a vehicle is charged with a high rate current at a charging pile (6), the valve is turned on, and heat is absorbed during a process of converting the liquid nitrogen to reduce the temperature of the battery pack (13).

2. The rapid cooling and temperature maintenance system for the power battery
during fast charging according to claim 1, wherein
the valve is an electronic valve (3).

3. The rapid cooling and temperature maintenance system for the power battery during fast charging according to claim 2, further comprising a first control unit (15), wherein
the first control unit (15) is respectively connected with the charging pile (6), the liquid nitrogen vaporizer (4) and the electronic valve (3), and the first control unit (15) is configured to control the electronic valve (3) and liquid nitrogen vaporizer (4) to be on or off according to a charging mode of the charging pile (6).

4. The rapid cooling and temperature maintenance system for the power battery
during fast charging according to any one of claim 1 to claim 3, wherein
an evaporation port is arranged on the battery pack (13).

5. The rapid cooling and temperature maintenance system for the power battery during fast charging according to any one of claims 1 to 4, further comprising a pressure sensor (16) and a second control unit (17), wherein
the battery pack (13) is provided with an explosion-proof valve (18),
the second control unit (17) is respectively connected with the explosion-proof valve (18) and the pressure sensor (16),
the pressure sensor (16) is configured to detect a pressure in the battery pack (13), the second control unit (17) is configured to receive a pressure value detected by the pressure sensor (16), and control the explosion-proof valve (18) to open and remove the nitrogen gas from the battery pack (13) when it is determined that the pressure value is greater than a pressure preset threshold.
